Europäisches Patentamt

European Patent Office

Office européen des brevets

(19)

(11) Numéro de publication : **0 052 728**
**B1**

## FASCICULE DE BREVET EUROPÉEN

(12)

(45) Date de publication du fascicule du brevet :
24.04.85

(21) Numéro de dépôt : 81108055.5

(22) Date de dépôt : 08.10.81

(51) Int. Cl.⁴ : **A 23 P   1/00, A 23 G   3/02**

(54) Procédé de fabrication d'un produit alimentaire par frittage.

(30) Priorité : 31.10.80 CH 8114/80

(43) Date de publication de la demande :
02.06.82 Bulletin 82/22

(45) Mention de la délivrance du brevet :
24.04.85 Bulletin 85/17

(84) Etats contractants désignés :
BE DE FR IT LU NL

(56) Documents cités :
BE-A-   442 390
DE-C-   260 680
FR-A- 1 120 909
FR-A- 1 186 619
Le dossier contient des informations techniques présentées postérieurement au dépôt de la demande et
ne figurant pas dans le présent fascicule.

(73) Titulaire : SOCIETE DES PRODUITS NESTLE S.A.
Case postale 353
CH-1800 Vevey (CH)

(72) Inventeur : Rostagno, Walter
Chemin de la Doges 22
CH-1814 La Tour-De-Peilz (CH)
Inventeur : Morand, Alfred
Chemin de la Baye 10
CH-1807 Blonay (CH)

EP 0 052 728 B1

## Description

La présente invention se rapporte à la fabrication de produits alimentaires se présentant sous forme d'articles unitaires, en particulier des produits culinaires salés ou de confiserie ou de chocolaterie.

Elle concerne plus particulièrement la fabrication de barres unitaires compactes, à partir d'un produit pulvérulent.

Les produits existants sont généralement fabriqués par extrusion et découpage d'un ruban ou par compactage à froid sous forte pression ou encore par humidification de la poudre pour la mettre sous forme d'une masse collante, laminage de la masse, découpage de celle-ci en portions individuelles et séchage par traitement à la chaleur, ce traitement s'accompagnant éventuellement d'une mise du produit sous vide qui provoque son expansion.

Ces procédés sont coûteux et difficiles à mettre en œuvre :

— le produit final est inhomogène du fait de la difficulté d'assurer une dispersion régulière du liquide,

— l'économie du procédé est mauvaise car l'humidification de la poudre pour la mise de celle-ci sous forme d'une masse collante impose une évaporation subséquente de l'eau introduite,

— le fait de ne pas utiliser de moule nécessite un compactage sous très forte pression, pour que les produits unitaires gardent leur forme et soient « auto-porteurs », cette opération étant fréquemment suivie d'une expansion sous vide permettant d'aérer la structure.

En particulier :

— FR-A-1 186 619 concerne un procédé de moulage de produits alimentaires pulvérulents comprenant éventuellement un compactage de la poudre suivi d'un frittage par application d'un champ capacitif à haute fréquence. On notera que les produits traités comprennent soit la combinaison d'une matière humide ne se ramollissant pas au chauffage et d'un liant hygroscopique, soit un mélange d'une matière granulée ne se ramollissant pas au chauffage et d'un sirop (exemples 1 et 2 p. 2 et résumé p. 3, c et d). De plus le compactage préalable de la poudre constitue seulement une option. La demanderesse a effectué des essais qui ont montré que l'application des hyperfréquences conduisait à des produits brûlés dans des moules en matière plastique lorsqu'on traitait une poudre ayant une humidité inférieure à 20 % en poids.

— FR-A-1 120 909 a trait à un procédé de fabrication de tablettes vitreuses par séchage d'un sirop à 145 °C, refroidissement, incorporation d'huile essentielle et granulation, compactage en tablettes sous très forte pression puis chauffage à 55 °C en étuve pendant une heure : on notera que les tablettes « fondent à peu près complètement en formant une masse compacte ». De plus, le compactage sous très forte pression est nécessaire selon ce procédé pour obtenir des produits moulés qui gardent leur forme.

La demanderesse a trouvé qu'on peut fabriquer des articles moulés, notamment sous forme de barre à partir d'une matière première en poudre par un procédé particulièrement simple à mettre en œuvre et qui ne présente pas les inconvénients des procédés connus.

L'invention concerne un procédé de fabrication d'un produit alimentaire sous forme d'article unitaire, notamment de barre, à partir d'une matière première pulvérulente ayant une teneur en humidité inférieure à 20 % en poids, susceptible de se ramollir superficiellement sous l'effet de la chaleur et présentant une bonne fluidité, caractérisé par le fait qu'on introduit la poudre dans les alvéoles d'un moule, qu'on la compacte légèrement dans les alvéoles, qu'on fait subir à la poudre compactée un traitement de frittage dans un four à radiation infra-rouge pendant 3 à 10 min et à une température du produit de 45 à 120 °C, durée et température telles que les particules individuelles fondent en surface et collent les unes aux autres, qu'on démoule les articles et qu'on les refroidit.

Les particules constitutives de la poudre doivent être aptes à fondre en surface et à fusionner entre elles, de façon à former une structure rigide sans effritement après refroidissement.

Par « poudre présentant une bonne fluidité », on entend une poudre dont les particules sont sèches au toucher et non collantes et s'écoulent librement. La teneur en humidité d'une telle poudre est généralement son humidité naturelle d'équilibre à laquelle le produit mis en œuvre est habituellement conditionné.

Pourvu qu'elle remplisse les conditions mentionnées ci-dessus de fusion superficielle et de fluidité, la matière première pulvérulente peut être choisie parmi une grande variété de matières alimentaires prises isolément ou en mélange contenant des hydrates de carbone. Dans la catégorie des produits culinaires entrent par exemple les extraits de légume, de viande et de poisson, les hydrolysats de protéines, les extraits de levure, le fromage, le lait, les céréales, les amidons, notamment les amidons modifiés et les dextrines, la matière première pouvant contenir également d'autres ingrédients tels que des épices, des arômes, des colorants, des graisses, des sucres ou des sels.

Les matières premières de confiserie ou chocolaterie comprennent par exemple les extraits de fruits, les sucres, les malto-dextrines, le cacao, le café, la chicorée, les céréales maltées, le lait, les graisses. Ces matières peuvent également contenir les ingrédients habituellement utilisés en confiserie et en chocolaterie tels que les arômes, lécithines, sucres cuits, miel, caramel, nougatine, céréales soufflées, fruits secs ou confits broyés ou entiers.

On préfère en général les matières premières à prédominance d'hydrates de carbone ayant un taux de matières grasses inférieur à 25 % en poids.

La granulométrie de la poudre a naturellement une influence sur la texture du produit : l'article fini sera plus compact si la poudre mise en œuvre est plus fine. Des particules de granulométrie comprise entre 0,1 et 3 mm donnent des résultats satisfaisants.

Pour mettre en œuvre le procédé selon l'invention, on remplit les alvéoles d'un moule de poudre jusqu'au bord et on nivelle le produit au moyen d'un racleur, l'alvéole individuelle constituant à la fois le moule et l'unité de dosage du produit.

On procède ensuite à un compactage de la poudre par application à l'aide d'un piston adapté à l'alvéole du moule d'une pression correspondant à 1 à 8 kg/cm² au niveau du produit. Cette opération a pour but de mettre en contact les particules individuelles de poudre, ce qui est nécessaire pour l'opération ultérieure de frittage et la structure finale du produit.

En variante, on peut faire vibrer les moules de manière à assurer un bon contact des particules individuelles de poudre entre elles, ceci en remplacement de l'opération de compactage.

L'étape suivante dite de frittage consiste à porter le produit compacté à une température de 45 à 120 °C pendant 3 à 10 minutes dans un four-tunnel. La durée du traitement et la température appliquée dépendent du volume de poudre à traiter, de sa nature, de sa composition et de son taux d'humidité. Le but de ce traitement est d'amener la poudre dans un état de fusion superficielle tel que les particules individuelles fondent en surface et collent les unes aux autres. La température du four dépend du type d'appareil. Elle se situe généralement entre 100 et 300 °C. Pendant cette opération le produit perd tout ou partie de son humidité d'équilibre contrairement aux procédés classiques comprenant l'humidification préalable du produit suivie d'un traitement thermique de séchage.

Pour des raisons d'efficacité du procédé, on préfère se limiter à une épaisseur du produit d'environ 20 mm, ce qui permet d'assurer un transfert de chaleur donnant un produit à texture homogène.

A la sortie du four, les produits sont démoulés par retournement des moules et ceux-ci sont recyclés. Les articles sont ensuite refroidis et en particulier à une température inférieure à 25 °C lorsqu'il s'agit d'articles destinés à être enrobés d'une couverture de chocolat.

L'enrobage est constitué d'une ou de deux couches, cet enrobage constituant une barrière protectrice contre la pénétration d'humidité et permettant d'éviter le blanchiment gras. Les produits ainsi enrobés sont ensuite conditionnés par exemple en système « flow-pack ».

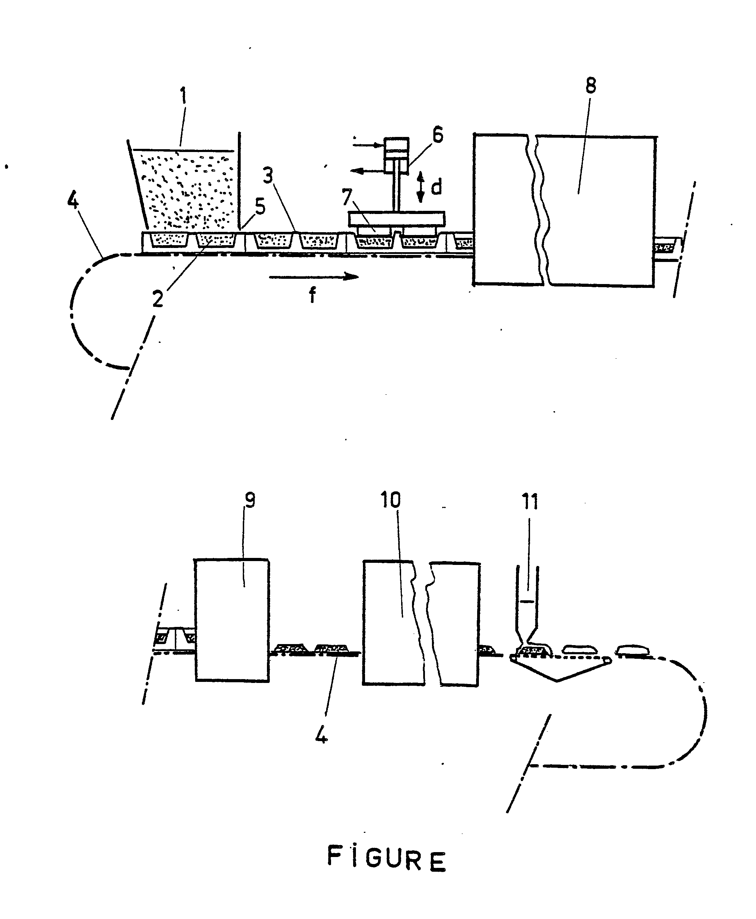

Le dessin annexé illustre schématiquement et à titre d'exemple une installation permettant d'exécuter en continu le procédé selon l'invention.

La figure est un schéma simplifié de l'installation.

Telle que représentée au dessin, l'installation comporte une trémie d'alimentation 1 qui distribue la poudre dans les alvéoles 2 des moules 3 solidaires d'une chaîne de transport 4 en défilement pas à pas (5-15 déplacements par minute) dans le sens de la flèche f. Après remplissage ou simultanément, le moule est arasé par le dispositif racleur 5 et les moules sont dirigés vers une presse à compacter 6 comprenant des empreintes 7 s'adaptant aux cavités du moule et qui effectue un mouvement de compression de haut en bas pendant les temps d'arrêt du transporteur en synchronisation avec la cadence de transport des moules (flèche d). Les moules cheminent à travers un four-tunnel 8 équipé d'une ou de plusieurs zones de chauffage. A la sortie du four le produit est démoulé au poste 9. Les moules sont recyclés jusqu'au poste de remplissage selon un trajet non représenté. Les articles démoulés sont ensuite refroidis dans le tunnel 10 puis enrobés au poste 11 et emballés à un poste de conditionnement non représenté.

Les exemples suivants, dans lesquels les valeurs expriment des rapports pondéraux, illustrent la mise en œuvre du procédé selon l'invention.

Exemple 1

On traite une poudre contenant les ingrédients : cacao à 21 % de matières grasses, céréales maltées, lait écrémé en poudre, huile de beurre, sucrose, lécithine, sels minéraux, vitamines, vanilline et ayant la composition :

| | |
|---|---|
| protéines | 13,0 |
| hydrates de carbone | 69,8 |
| lipides | 10,1 |
| sels minéraux | 4,6 |
| eau | 2,5 |

et les caractéristiques physiques :

| | |
|---|---|
| granulométrie (diamètre moyen) | 0,2 mm |
| poids spécifique apparent | 0,4 g/cm³ |

On distribue cette poudre dans les moules et on la compacte à une pression de 1 à 8 kg/cm². L'épaisseur initiale de la couche de 17,5 mm est alors réduite à 13 mm. Les moules passent en 4 min dans un four électrique à infra-rouge maintenu à 150 °C et muni d'un ventilateur d'évacuation de la vapeur. On démoule les articles par retournement des moules qui sont recyclés vers la remplisseuse. On refroidit les articles de 70 °C à une température inférieure à 25 °C en 6 min dans un tunnel.

On procède à l'enrobage des articles refroidis en deux étapes, d'abord avec une couverture contenant les ingrédients sucrose, graisses végétales, poudre de cacao à 13 % de matières grasses, poudre de lait écrémé, lécithine et vanilline, cette couche représentant 50 % du poids de l'article démoulé. Celui-ci est enrobé par la couverture liquide à 40 °C et refroidi en tunnel pour atteindre une température du produit de 23,5 °C. On effectue ensuite un second enrobage avec la même quantité de couverture que précédemment portée à 40 °C. L'article final est refroidi à une température inférieure à 20 °C.

En variante, la première couche d'enrobage est constituée de la couverture ci-dessus et la deuxième couche de chocolat au lait contenant les ingrédients sucrose, poudre de lait entier à 25 % de matières grasses, beurre de cacao, liqueur de chocolat, huile de beurre, lécithine et vanilline. La couverture est à 40 °C lors du premier enrobage et à 29 °C lors du second. On peut aussi utiliser un double enrobage de chocolat au lait, à 29 °C. Le chocolat au lait est avantageusement additionné de 0,5-1 % de sorbitantristéarate, comme agent antiblanchiment. On obtient ainsi une barre enrobée de 25-30 g.

## Exemple 2

On procède comme à l'exemple 1 à la fabrication d'une barre enrobée dont le centre représente 44,1 % de poudre selon l'exemple 1 et 7,8 % de noisettes entières rôties, l'enrobage étant constitué de 48,1 % de chocolat au lait selon l'exemple 1.

## Exemples 3-6

On procède comme à l'exemple 1 à la fabrication des barres enrobées suivantes :

| Exemple | | Centre | | | Enrobage |
|---|---|---|---|---|---|
| 3 | 65 % : | noix de coco séchée | 29,5 | % | 35 % chocolat au lait |
| | | sucrose | 29,5 | % | selon l'exemple 1 |
| | | sirop de sorbitol | 6 | % | |
| 4 | 70 % : | mélange selon l'exemple 3 | 60 | % | 30 % chocolat au lait |
| | | cerises confites | 10 | % | selon l'exemple 1 |
| 5 | 52,2 % : | poudre de café instantané | 1,3 | % | 47,8 % chocolat au lait |
| | | poudre de chicorée instantanée | 1,1 | % | selon l'exemple 1 |
| | | poudre d'extrait de malt | 9,5 | % | |
| | | sucrose | 17,55 | % | |
| | | poudre de lait entier | | | |
| | | à 25 % de matières grasses | 21,35 | % | |
| | | poudre de cacao | | | |
| | | à 13 % de matières grasses | 1,4 | % | |
| 6 | 47,6 % : | poudre de lait écrémé | 7,6 | % | 52,4 % chocolat au lait |
| | | sirop de glucose | | | selon l'exemple 1 |
| | | à 40 % d'équivalent dextrine | 1,9 | % | |
| | | poudre de lait entier | | | |
| | | à 25 % de matières grasses | 26,7 | % | |
| | | extrait de malt | 11,4 | % | |

## Exemple 7

On procède comme à l'exemple 1 à la confection d'un centre à partir d'une poudre contenant :

| | |
|---|---|
| poudre de lait écrémé | 30 % |
| sucrose | 40 % |
| matière grasse végétale (biscuitine N®) | 10 % |
| extrait de malt | 2 % |
| lécithine, sel, acide citrique, arôme | 1 % |
| eau | 17 % |

Dans le produit fini, le centre représente 59,4 % et est enrobé avec 40,6 % d'une couverture au chocolat au lait selon l'exemple 1.

4

# 0 052 728

## Exemples 8-34

Ces exemples montrent que le procédé selon l'invention est applicable avec des résultats satisfaisants à des poudres d'origines très diverses.

Le tableau ci-dessous donne les conditions de fabrication des centres :

| Ex. | Ingrédient | Pression de compactage (kg/cm²) | Durée du traitement dans le four (min.) | Temp. du four (°C) | Temp. du produit (°C) | Résultats frittage |
|---|---|---|---|---|---|---|
| 8 | malt | 2,5 | 5 | 100 | 68 | bon |
| 9 | dextrose | 5 | 5 | 150 | 85 | bon |
| 10 | sorbitol | 5 | 5 | 75 | 53 | bon |
| 11 | café instantané lyophilisé | 3,7 | 5 | 120 | 83 | bon |
| 12 | sucre Amstar® à 1 % d'humidité (Amstar corporation) | 2,5 | 5 | 150 | 90 | bon |
| 13 | Biogerme® (Multiforsa AG) | 2,5 | 8 | 150 | 90 | bon |
| 14 | Sugar puffs | 1,3 | 5 | 100 | 62 | bon démoulage difficile |
| 15 | Toffé (lait écrémé + sirop de glucose à 40 % d'équivalent dextrine) | 2,5 | 5 | 100 | 59 | bon |
| 16 | chicorée | 2,5 | 10 | 120 | 80 | moyen |
| 17 | lactose | 3,7 | 10 | 150 | 91 | moyen |
| 18 | lait écrémé | 3,7 | 10 | 120 | 85 | bon |
| 19 | lait à 25 % de matières grasses | 2,5 | 10 | 120 | 87 | moyen |
| 20 | chocolat au lait | 1,3 | 8 | 120 | 97 | bon |
| 21 | chocolat noir | 1,3 | 8 | 120 | 96 | bon |
| 22 | fruits (fraise) | 2,5 | 5 | 120 | 75 | moyen |
| 23 | miel | 2,5 | 53 | 75 | 48 | collant |
| 24 | fromage sec | 2,5 | 10 | 150 | 101 | moyen |
| 25 | fromage + lactose | 2,5 | 5 | 100 | 72 | moyen |
| 26 | lait acidifié | 2,5 | 10 | 120 | 89 | moyen |
| 27 | potage déshydraté pois-jambon | 3,7 | 8 | 150 | 91 | bon |
| 28 | potage déshydraté tomate | 3,7 | 5 | 120 | 72 | bon |
| 29 | bouillon, pommes de terre (30 %) déshydraté | 3,7 | 5 | 150 | 91 | bon |
| 30 | potage déshydraté céréales | 3,7 | 5 | 150 | 90 | bon |
| 31 | Ovomaltine® (Wander AG) | 3,7 | 10 | 150 | 102 | moyen |
| 32 | Prontovo® (Wander AG) | 3,7 | 8 | 150 | 91 | bon |
| 33 | Dawamalt® (Wander AG) | 3,5 | 5 | 150 | 90 | bon |
| 34 | Soyamalt® (Morga S.A.) | 3,7 | 3 | 130 | 67 | moyen |

## Revendications

1. Procédé de fabrication d'un produit alimentaire sous forme d'article unitaire, notamment de barre, à partir d'une matière première pulvérulente ayant une teneur en humidité inférieure à 20 % en poids, susceptible de se ramollir superficiellement sous l'effet de la chaleur et présentant une bonne fluidité, caractérisé par le fait qu'on introduit la poudre dans les alvéoles d'un moule, qu'on la compacte légèrement dans les alvéoles, qu'on fait subir à la poudre compactée un traitement de frittage dans un four à radiation infra-rouge pendant 3 à 10 minutes et à une température du produit de 45 à 120 °C,

5

température telle que les particules individuelles fondent en surface et collent les unes aux autres, qu'on démoule les articles et qu'on les refroidit.

2. Procédé selon la revendication 1, caractérisé en ce qu'on compacte la poudre en lui appliquant une pression de 1 à 8 kg/cm² dans les alvéoles du moule.

3. Procédé selon la revendication 1, caractérisé en ce que la poudre a une granulométrie comprise entre 0,1 et 3 mm.

4. Procédé selon la revendication 1, caractérisé en ce que la poudre a une teneur en matières grasses inférieure à 25 % en poids.

5. Procédé selon la revendication 1, caractérisé en ce que la matière première est un produit culinaire choisi parmi les extraits de légume, de viande, de poisson, de levure, les hydrolysats de protéine, le fromage, le lait, les céréales, les amidons, les amidons modifiés et les dextrines.

6. Procédé selon la revendication 5, caractérisé en ce que la matière première contient des additifs choisis parmi les épices, les arômes, les colorants, les graisses, les sucres ou les sels.

7. Procédé selon la revendication 1, caractérisé en ce que la matière première est un produit de confiserie ou de chocolaterie choisi parmi les extraits de fruits, les sucres, les malto-dextrines, le cacao, le café, la chicorée, les céréales maltées, le lait et les graisses.

8. Procédé selon la revendication 7, caractérisé en ce que la matière première contient des additifs choisis parmi les arômes, les lécithines, les sucres cuits, le miel, le caramel, la nougatine, les céréales soufflées, les fruits secs et les fruits confits.

9. Procédé selon la revendication 7 ou 8, caractérisé en ce que la matière première contient du cacao, des céréales maltées, du lait écrémé en poudre, de l'huile de beurre, du sucrose, de la lécithine, de la vanilline, des sels minéraux et des vitamines.

10. Procédé selon la revendication 7 ou 9, caractérisé en ce que l'article est refroidi à une température inférieure à 25 °C et enrobé en une ou deux étapes par un enrobage à base de chocolat.

11. Articles obtenus par la mise en œuvre du procédé selon l'une des revendications 1 à 10.


## Claims

1. A process for the production of a food product in the form of an individual article, particularly a bar from a powder-form starting material having a moisture content of less than 20 % by weight, capable of being superficially softened under the effect of heat and having a high level of fluidity, which comprises introducing the powder into the cells of a mould, lightly compacting it in the cells, subjecting the compacted powder to a sintering treatment in an infrared furnace for 3 to 10 min. and at a temperature of the product of 45 to 120 °C, such temperature being so that the individual particles melt at their surface and adhere to one another, removing the articles from the moulds and cooling them.

2. A process as claimed in Claim 1, wherein the powder is compacted by applying a pressure of from 1 to 8 kg/cm² to it in the cells of the mould.

3. A process as claimed in Claim 1, wherein the powder has a particle size of from 0.1 to 3 mm.

4. A process as claimed in Claim 1, wherein the powder has a fat content of less than 25 % by weight.

5. A process as claimed in Claim 1, wherein the starting material is a culinary product selected from vegetable, meat, fish or yeast extracts, protein hydrolysates, cheese, milk, cereals, starches, modified starches and dextrins.

6. A process as claimed in Claim 5, wherein the starting material contains one or more additives selected from spices, flavourings, colourants, fats, sugars and salts.

7. A process as claimed in Claim 1, wherein the starting material is a product of the type used in the production of confectionery or chocolate selected from fruit extracts, sugars, maltodextrins, cocoa, coffee, chicory, malted cereals, milk and fats.

8. A process as claimed in Claim 7, wherein the starting material contains one or more additives selected from flavourings, lecithins, boiled sugars, honey, caramel, nougatine, expanded cereals, dried fruit and candied fruit.

9. A process as claimed in Claim 7 or 8, wherein the starting material contains cocoa, malted cereals, skimmed milk powder, butter oil, sucrose, lecithin, vanillin, mineral salts and vitamins.

10. A process as claimed in Claim 7 or 9, wherein the article is cooled to a temperature below 25 °C and coated in one or two stages with a chocolate-based coating.

11. A food product when obtained by a process as claimed in any of claims 1 to 10.


## Patentansprüche

1. Verfahren zur Herstellung eines Nahrungsmittelprodukts in Form eines einheitlichen Gegenstands, insbesondere einer Stange, ausgehend von einem pulverförmigen Ausgangsmaterial mit einem Feuchtigkeitsgehalt von weniger als 20 Gewichtsprozent, das unter der Einwirkung von Wärme in der Lage ist, oberflächlich zu erweichen, und das eine gute Fließfähigkeit aufweist, dadurch gekennzeichnet, daß man das Pulver in die Hohlräume einer Form eingibt, daß man es in den Hohlräumen leicht verdichtet, daß man das verdichtete Pulver einer Sinter-Behandlung in einem Infrarot-Strahlungsofen innerhalb von 3 bis 10 Minuten und bei einer Produkttemperatur von 45 bis 120° bei einer solchen Temperatur unterwirft, bei der die individuellen Teilchen an der Oberfläche zerfließen und miteinander verkleben, daß man die Gegenstände entformt und daß man sie abkühlt.

2. Verfahren nach Anspruch 1, dadurch gekennzeichnet, daß man das Pulver verdichtet, indem man auf dieses einen Druck von 1 bis 8 kg/cm$^2$ in den Formhohlräumen ausübt.

3. Verfahren nach Anspruch 1, dadurch gekennzeichnet, daß das Pulver eine Teilchengrößenzusammensetzung zwischen 0,1 und 3 mm aufweist.

4. Verfahren nach Anspruch 1, dadurch gekennzeichnet, daß das Pulver einen Fettgehalt von weniger als 25 Gewichtsprozent aufweist.

5. Verfahren nach Anspruch 1, dadurch gekennzeichnet, daß das Ausgangsmaterial ein Nahrungsmittelprodukt ist, das ausgewählt ist aus Extrakten aus Gemüse, Fleisch, Fisch, Hefe, aus Proteinhydrolysaten, Käse, Milch, Getreideprodukten, Stärken, modifizierten Stärken und Dextrinen.

6. Verfahren nach Anspruch 5, dadurch gekennzeichnet, daß das Ausgangsmaterial Zusätze enthält, die ausgewählt sind aus Gewürzen, Aromen, Farbstoffen, Fetten, Zuckern oder Salzen.

7. Verfahren nach Anspruch 1, dadurch gekennzeichnet, daß das Ausgangsprodukt ein Konditorei- oder Schokoladen-Produkt ist, das ausgewählt ist aus Fruchtextrakten, Zuckern, Maltodextrinen, Kakao, Kaffee, Zichorie, gemalten Getreiden, Milch und Fetten.

8. Verfahren nach Anspruch 7, dadurch gekennzeichnet, daß das Ausgangsmaterial Zusätze enthält, die ausgewählt sind unter Aromen, Lecithinen, Rohzuckern, Honig, Karamel, Nougat, gepufften Getreiden, Trockenfrüchten und eingemachten Früchten.

9. Verfahren nach Anspruch 7 oder 8, dadurch gekennzeichnet, daß das Ausgangsmaterial Kakao, gemalzte Getreide, Magermilchpulver, Butterfett, Sacharose, Lecithin, Vanille, Mineralsalze und Vitamine enthält.

10. Verfahren nach Anspruch 7 oder 9, dadurch gekennzeichnet, daß der Gegenstand auf eine Temperatur unterhalb von 25 °C abgekühlt und in zwei Schritten mit einer Hülle auf Schokoladebasis ummantelt wird.

11. Gegenstände, die bei der Durchführung eines Verfahrens nach einem der Ansprüche 1-10 erhalten werden.

FIGURE